**Europäisches Patentamt**

**European Patent Office**

**Office européen des brevets**

(19)

(11) Veröffentlichungsnummer: **0 292 795 B1**

(12) # EUROPÄISCHE PATENTSCHRIFT

(45) Veröffentlichungstag der Patentschrift:
24.07.91 Patentblatt 91/30

(51) Int. Cl.⁵: **F01L 1/04, B21D 39/04**

(21) Anmeldenummer: **88107625.1**

(22) Anmeldetag: **11.05.88**

(54) **Hohlwelle mit durch Aufweiten derselben darauf befestigten Antriebselementen mit axial unterschiedlichen Werkstoffeigenschaften.**

(30) Priorität: **25.05.87 DE 3717534**

(43) Veröffentlichungstag der Anmeldung:
**30.11.88 Patentblatt 88/48**

(45) Bekanntmachung des Hinweises auf die
Patenterteilung:
**24.07.91 Patentblatt 91/30**

(84) Benannte Vertragsstaaten:
**BE CH DE ES FR GB IT LI NL SE**

(56) Entgegenhaltungen:
**EP-A- 0 190 841**
**EP-A- 0 213 529**
**DE-A- 3 227 693**
**DE-A- 3 616 901**

(56) Entgegenhaltungen:
**DE-U- 8 713 285**
**PATENT ABSTRACTS OF JAPAN, Band 6, Nr. 256 (M-179)[1134], 15. Dezember 1982, Seite 4 M 179; & JP-A-57 149 655 (NISSAN JIDOSHA K.K.) 16-09-1982**

(73) Patentinhaber: **Emitec Gesellschaft für Emissionstechnologie mbH**
**Hauptstrasse 150**
**W-5204 Lohmar 1 (DE)**

(72) Erfinder: **Swars, Helmut, Dipl.-Ing.**
**Riedweg 11**
**W-5060 Bergisch Gladbach 1 (DE)**

(74) Vertreter: **Neumann, Ernst Dieter, Dipl.-Ing.**
**HARWARDT NEUMANN PATENTANWÄLTE**
**Scheerengasse 2 Postfach 1455**
**W-5200 Siegburg (DE)**

**Beschreibung**

Die vorliegende Erfindung betrifft eine Hohlwelle mit durch abschnittsweises Aufweiten derselben darauf befestigten, zum Teil aus sprödem Material bestehenden Antriebselementen.

In der EP-A-O 213 529 wird ein Verfahren zum Befestigen von Antriebselementen, wie Nocken, Zahnrädern oder Lagerschalen auf einer Hohlwelle vorgeschlagen, bei der diese aus einem handelsüblichen Rohr besteht, auf die die Elemente aufgeschoben werden, worauf sie durch Aufweiten der darunterliegenden Abschnitte des Rohres auf diesem befestigt werden. Um eine kostspielige Nachbearbeitung der so zusammengesetzten Welle zu vermeiden, sollten die Antriebselemente vor dem Zusammenbau bereits weitgehend fertig bearbeitet sein ; hierzu gehört ggf. auch das Härten der Oberfläche derselben. Um einen festen Sitz der Antriebselemente auf der Welle zu erzielen, muß erstere durch den Aufweitvorgang plastisch verformt werden, während die Verformung der letzteren im elastischen Bereich bleibt, so daß sie am Ende des Aufweitvorganges zurückfedern können.

Mit der DE-A 32 27 693 wird eine Nockenwelle und ein Verfahren zu ihrer Herstellung beschrieben, bei der die Nocken aus Bandmaterial feingestanzt und anschließend vergütet und gehärtet werden. Die auf einer Hohlwelle aufgezogenen Nocken werden durch Aufweiten der Hohlwelle kraftschlüssig mit dieser verbunden, wobei in der Aufnahmebohrung für die Welle beidseitig Fasen an den Nocken vorgesehen werden können, die einen Ringspalt mit dem Rohr bilden, in den Klebstoff gefüllt werden kann.

Es hat sich nun gezeigt, daß die gehärtete Oberfläche der Antriebselemente bei der elastischen Verformung derselben zur Rißbildung neigt.

Aufgabe der vorliegenden Erfindung ist eine Weiterbildung der nach den obigen Verfahren hergestellten Hohlwellen mit Antriebselementen, insbesondere Nocken, dahingehend, daß dieser Übelstand vermieden wird, bei gleichzeitiger Beibehaltung des Vorteils, die Antriebselemente vor dem Zusammenbau praktisch vollständig fertigstellen zu können.

Die Lösung dieser Aufgabe erfolgt dadurch, daß die Antriebselemente axial gesehen aus ersten Bereichen bestehen, die örtlich durch Härtungsprozesse versprödetes Material geringer Dehnbarkeit enthalten, und aus zweiten Bereichen, die nur Material hoher Dehnbarkeit umfassen, und daß Abschnitte der Hohlwelle aufgeweitet sind, die den zweiten Bereichen der Antriebselemente gegenüberliegen, wobei die ersten Bereiche nicht verformt worden sind. Die Antriebselemente lassen sich, wie weiter unten anhand der Zeichnungsbeschreibung ausgeführt wird, unschwer so gestalten, daß sie axial gesehen aus mehreren "Scheiben" aufgebaut sind, von denen nur einzelne an ihrer dem Verschleiß ausgesetzten Oberfläche sprödes Material enthalten, z.B. gehärtet sind. Die Verbindung zwischen Welle und Antriebselement erfolgt dann nur im Bereich derjenigen "Scheiben", die nur Material hoher Dehnbarkeit enthalten. Diejenigen "Scheiben" dagegen, die Material geringer Dehnbarkeit enthalten, werden durch den Befestigungsvorgang nicht verformt.

Nach einer ersten Alternative werden nur diejenigen Bereiche der Hohlwelle aufgeweitet, die den Bereichen der Antriebselemente gegenüberliegen, die lediglich Material hoher Dehnbarkeit enthalten.

Nach einer anderen Alternative weisen die Antriebselemente in denjenigen Bereichen, in denen sie Material geringer Dehnbarkeit enthalten, einen vergrößerten Innendurchmesser, z.B. eine Eindrehung auf. Diese ist so bemessen, daß der ihr gegenüberliegende, mit vom Aufweitprozeß betroffene Abschnitt der Hohlwelle bei dem vorgesehenen Aufweitmaß nicht am Antriebselement zur Anlage kommt, so daß dieser Bereich ebenfalls vor auch nur vorübergehender Verformung bewahrt bleibt.

Für die Zusammensetzung der Antriebselemente sind wiederum zwei Alternativen angegeben. Diese können entweder z.B. aus einem geeignetem Maschinenbaustahl oder aus Sintermaterial bestehen und an ihrer dem Verschleiß ausgesetzten Oberfläche mittels eines der bekannten Härtungsverfahren vergütet worden sein, oder andererseits von vorneherein aus zwei oder mehr durch Schweißen, Umgießen und-/oder durch entsprechende Formgestaltung miteinander verbundenen Teilen, von denen einer z.B. aus Stahl guter Dehnbarkeit und der andere aus hartem Grauguß bestehen kann.

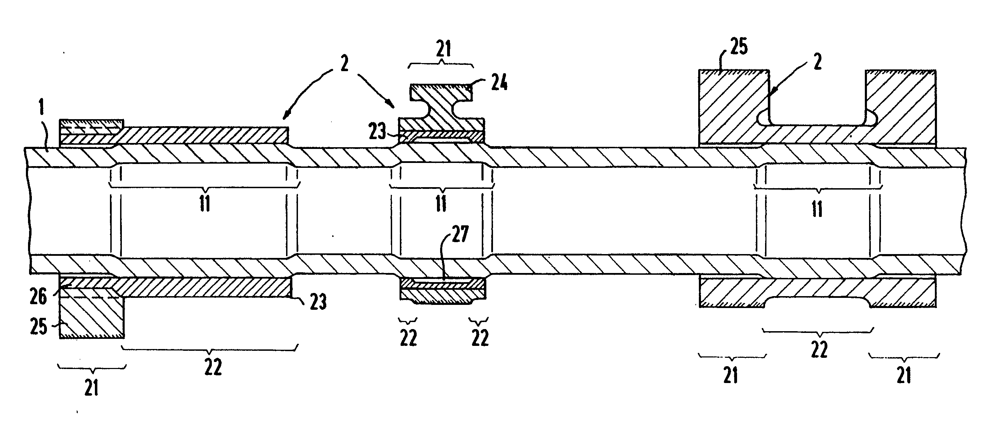

Ausführungsbeispiele der Erfindung sind in der Zeichnung dargestellt, und zwar im Längsaxialschnitt, wobei als exemplarisch eine Nockenwelle gewählt wurde. Diese ist aufgebaut aus einer Hohlwelle 1 aus einem Rohr mit ursprünglich durchgehend gleichem Querschnitt und aus Nocken 2, die durch Aufweiten bestimmter Abschnitte 11 der Hohlwelle 1 auf dieser befestigt sind. Die Nocken 2 wiederum bestehen axial gesehen aus ersten Bereichen 21, die Material geringer Dehnbarkeit enthalten und aus zweiten Bereichen 22, die nur solches hoher Dehnbarkeit enthalten. Von links nach rechts fortschreitend ist zunächst ein Einzelnocken dargestellt, der aus einer Stahlhülse 23 besteht und einem daran angegossenen Teil 24 aus einem Sintermaterial oder Grauguß/Globular. Dessen dem Verschleiß ausgesetzte Oberfläche 25 wurde z.B. induktionsgehärtet, wodurch eine harte Randschicht entsteht (durch die dichtere Signatur angedeutet). Zur Unterstützung des die beiden Teile verbindenden Stoffschlusses ist auch ein Formschluß durch eine ineinandergreifende Längsverzahnung 26 vorgesehen. Die Stahlhülse 23 kann von solcher Oberflächenbeschaffenheit sein, daß sie auch als Lagerstelle nutzbar ist. Nur derjenige Abschnitt 11 der Hohlwelle 1 ist plastisch verformt, der dem Bereich 22 gegenüberliegt und auch nur dieser wurde beim Aufweitvorgang elastisch verformt. Die rißgefährdete Oberfläche 25 wurde dabei keinen Belastungen ausgesetzt.

Ferner ist ein weiterer Einzelnocken dargestellt, bei dem zwischen Nockenteil 24 und Hohlwelle 1 auf der ganzen Länge eine Stahlhülse 23 eingelegt ist. Diese ist jedoch dort, wo sie dem ersten Bereich 21 gegenüberliegt, mit einer Hinterdrehung 27 versehen, so daß der Bereich 21 auch dann beim Aufweitvorgang keinen Verformungen ausgesetzt ist, wenn der Abschnitt 11 den ersten Bereich 21 mit umschließt.

Als weiteres ist ein Doppelnocken aus einem ursprünglich homogenen Material wie z.B. Temperguß dargestellt, das lediglich örtlich durch entsprechende Behandlung gehärtet, d.h. versprödet ist. Hier umfaßt der aufgeweitete Abschnitt 11 ebenfalls nur einen Teil der Längsausdehnung des Nockens.

## Patentansprüche

1. Hohlwelle (1) mit durch abschnittsweises Aufweiten derselben (11) darauf befestigten, zum Teil aus sprödem Material bestehenden Antriebselementen (2), dadurch gekennzeichnet, daß die Antriebselemente (2) axial gesehen aus ersten Bereichen (21) bestehen, die örtlich durch Härtungsprozesse versprödetes Material geringer Dehnbarkeit enthalten, und aus zweiten Bereichen (22), die nur Material hoher Dehnbarkeit umfassen, und daß Abschnitte (11) der Hohlwelle aufgeweitet sind, die den zweiten Bereichen der Antriebselemente gegenüberliegen, wobei die ersten Bereiche (21) nicht verformt worden sind.

2. Hohlwelle (1) nach Anspruch 1, dadurch gekennzeichnet, daß nur diejenigen Abschnitte (11) der Hohlwelle (1) aufgeweitet sind, die den zweiten Bereichen (22) der Antriebselemente (2) gegenüberliegen.

3. Hohlwelle (1) nach Anspruch 1, dadurch gekennzeichnet, daß die Antriebselemente (2) in ihren ersten Bereichen (21) einen größeren Innendurchmesser (27) aufweisen als in ihren zweiten Bereichen (22).

4. Hohlwelle (1) nach Anspruch 1, dadurch gekennzeichnet, daß die Antriebselemente (2) aus ursprünglich homogenem, örtlich durch Härtungsprozesse versprödetem Material bestehen.

5. Hohlwelle (1) nach Anspruch 1, dadurch gekennzeichnet, daß die Antriebselemente 82) aus stoff- und/oder formschlüssig (26) miteinander verbundenen Teilen (23, 24) aus verschiedenem Material bestehen.

6. Hohlwelle (1) nach Anspruch 1 oder 5, dadurch gekennzeichnet, daß die Antriebselemente (2) in ihren zweiten Bereichen (22) aus Stahl und in ihren ersten Bereichen (21) wenigstens teilweise aus Grauguß oder Sintermaterial bestehen.

## Claims

1. Hollow shaft (1) with driving elements (2) consisting in part of brittle material, fastened on to said shaft (1) by means of expansion of the same in sections (11), characterised in that the driving elements (2), viewed axially, are comprised of first areas (21) which contain material of lower ductility locally embrittled by means of hardening processes, and second areas (22) which comprise only material of high ductility, and in that sections (11) of the hollow shaft, which are opposite the second areas of the driving elements, are expanded, whereby the first areas (21) have not been deformed.

2. Hollow shaft (1) as claimed in Claim 1, characterised in that only those sections (11) of the hollow shaft (1) which are opposite to the second areas (22) of the driving elements (2) are expanded.

3. Hollow shaft (1) as claimed in Claim 1, characterised in that the driving elements (2) have a larger inside diameter (27) in their first areas (21) than in their second areas (22).

4. Hollow shaft (1) as claimed in Claim 1, characterised in that the driving elements (2) consist of originally homogeneous material, locally embrittled by means of hardening processes.

5. Hollow shaft (1) as claimed in Claim 1, characterised in that the driving elements (2) comprise parts (23, 24) made of different material which are joined together in a material and/or positive locking manner (26).

6. Hollow shaft (1) as claimed in Claim 1 or 5, characterised in that the driving elements (2) consist of steel in their second areas (22) and in their first areas (21), at least partially, of gray cast iron or sintered material.

## Revendications

1. Arbre creux (1) sur lequel sont fixés par élargissement de celui-ci (11) par segments des éléments d'entraînement (2) consistant en partie en matériau fragile, caractérisé en ce que les éléments d'entraînement (2) vus en direction axiale consistent en des premiers domaines (21), qui contiennent localement un matériau de plus faible dilatabilité fragilisé par des procédés de trempe, et en des seconds domaines (22) qui comportent uniquement un matériau de plus grande dilatabilité, et en ce que les segments (11) de l'arbre creux qui sont situés en face des seconds domaines des éléments d'entraînement sont élargis, les premiers domaines (21) n'ayant pas été déformés.

2. Arbre creux (1) selon la revendication 1, caractérisé en ce que seuls les segments (11) de l'arbre creux (1) qui sont situés en face des seconds domaines (22) des éléments d'entraînement (2) sont élargis.

3. Arbre creux (1) selon la revendication 1, caractérisé en ce que les éléments d'entraînement (2) présentent dans leurs premiers domaines (21) un plus grand diamètre interne (27) que dans leurs seconds domaines (22).

4. Arbre creux (1) selon la revendication 1, caractérisé en ce que les éléments d'entrainement (2) consistent en un matériau homogène à l'origine, localement fragilisé par des procédés de trempe.

5. Arbre creux (1) selon la revendication 1, caractérisé en ce que les éléments d'entrainement (2) consistent en des parties (23, 24) en matériaux différents qui sont reliées entre elles par assemblage de matière et/ou de forme (26).

6. Arbre creux (1) selon la revendication 1 ou 5, caractérisé en ce que les éléments d'entrainement (2) consistent en acier dans leurs seconds domaines (22) et au moins partiellement en fonte grise ou en matériau fritté dans leurs premiers domaines (21).

EP 0 292 795 B1